# EUROPEAN PATENT APPLICATION

(11) **EP 1 808 465 A1**
(43) Date of publication of application: **18.07.2007**
(21) Application number: 05792181.9
(22) Date of filing: 21.09.2005
(51) Int. Cl.: C09C 1/00, C09C 3/06, C09C 3/12, C09D 5/36, C09D 7/12

(54) **A PEARL PIGMENT USED FOR EXTERNAL OUTSIDE**

(30) Priority: 24.09.2004 CN 200410083039
(71) Applicant: Lin, Yizhong, Wenzhou Zhejiang 325025 (CN)
(72) Inventor: LIN, Yizhong, Wenzhou, Zhejiang 325025 (CN); JIN, Wensong, Zhejiang 325025 (CN)
(74) Representative: Bublak, Wolfgang
(86) International application number: PCT/CN2005/001517
(87) International publication number: WO 2006/032199

(57) **Abstract**

The invention relates to a pearl pigment, and the preparing method of the same comprises: coating metal oxides on a sheet-like substrate, and coating metal phosphites (aluminum phosphite or zinc phosphite) on it, and then treating by hydrolysable silane coupling agent. The pearl pigment obtained highly improves its stability and its aging resistance when used for external outsides.

## Description

This invention relates to a post treated pearlescent pigment and its preparation. The said pearlescent pigment has an excellent stability and its properties of resistance to aging such as loss of luster and color shift has also been enhanced remarkably. The said pigment can be used in outdoor applications.

Pearl luster pigments are made by coating a platelet shaped substrate with metal oxides, which commonly are titanium dioxide and iron (III) oxide. Due to the refraction, reflection, absorption and interference of light, the pigments can display variant colors ranging from silver white to various pearlescent colors.

When pearl luster pigments are used in outdoor applications such as automobile painting, exterior painting of architects, and so on, owing to subject to the high temperature and humidity all the year round the coating film or layers become powdered or form bubbles, resulting loss of luster and color - a phenomenon called aging.

Recent years in order to overcome aging of the pearl luster pigments in the case of outdoor applications, post-coated pearl luster pigments for exterior use have been developed around the world.

US patent 4,134,776 firstly introduced a post-coated exterior pearl luster pigment. The material was made by coating a platelet shaped substrate first with metal oxides followed by hydrated Chromium (III) oxide (or hydroxide). The said pigment showed very good stability when used in outdoor applications and it is being used in many countries nowadays. However, due to the inherent green tint in the said pigment and the potential contamination to environment from chromium, it is no longer used in some countries.

Japanese patent JP1-292067 disclosed a post-coated exterior pearl luster pigment. The post coating was formed by generating oxide hydrates of zirconium and one of the manganese, cobalt and cerium in the presence of hypophosphite, and subsequently hydrolyzing silane coupling agent. The data in the patent showed that the stability of pearl luster pigment was greatly enhanced after the post-treatment by hydrolysis of silane coupling agent.

EP 0632109A1 disclosed a process of post coating of pearl luster pigment for enhancing its stability. The post coating comprises of hydrates of silica dioxide, aluminum oxide, zirconium oxide and/or cerium oxide. The final treatment of pigment was accomplished by hydrolysis of silane coupling agent or zirconium aluminate coupling agent.

US 5759255 also disclosed a recently developed post-treated exterior pearl luster pigments. The post coating layer comprises of hydrated alumina or a composition of alumina hydrate and cerium dioxide hydrate. Finally treatment was also made through the hydrolysis of silane coupling agent.

In this invention, it was found that the stability of pearl luster pigment prepared by coating with metal oxide layer could be noticeably enhanced by further coating with phosphites (aluminum phosphite or zinc phosphite) and cerium dioxide hydrate (cerium hydroxide), followed by the treatment of hydrolyzing the silane coupling agent. The properties of the said pigment resistance to aging such as luster loss and color shift could be obviously improved when used in outdoor applications.

The post-treated pearl luster pigment of this invention has the following structure:
Layer 1 is a platelet shaped substrate;
Layer 2 is one or more metal oxide coated on said substrate;
Layer 3 is a metal phosphite and cerium dioxide hydrate or hydroxide coated on said layer 2;
Layer 4 is a hydrolyzed silane coupling agent

In the above structure, the former two layers form the base pearl luster pigment after calcining. Layers 3 and 4 are post-coating layers on base pearl luster pigment.

The material suitable for layer 1 is mica (natural or synthetic).

The materials suitable for layer 2 are mainly titanium dioxide, iron (III) oxide, tin dioxide, zinc oxide, aluminium oxide, silicon oxide and other metal oxides.

The phosphites suitable for layer 3 are aluminum or zinc phosphite

The silane coupling agents suitable for layer 4 have a structure of YR-SiX₃ wherein Y represents an organic functional group, X represents an alkoxy group and R represents an alkyl group. The organic functional group and alkoxy group are directly or indirectly bonded to silicon. In the application course of pearl luster pigment, silane coupling agent acts as interface between organic material and pearl luster pigment thus increase the affinity between them.

The suitable silane coupling agent can be the silane coupling agent having amino group such as γ-aminopropyl trimethoxy silane, γ-aminopropyl triethoxy silane, N-(βaminoethyl)-γ-aminopropyl triethoxy silane, N- (βaminoethyl)-γ-aminopropyl trimethoxy silane etc. The suitable silane coupling agent also can be the silane coupling agent having no amino group such as γ-glycidoxypropyl trimethoxy silane, γ-methacryloxypropyl trimethoxy silane, γ-methacryloxypropyl methyltrimethoxy silane, γ-mercaptopropyl trimethoxy silane etc.

In this invention, the process for preparing exterior pearl luster pigment consists of the following five steps:
Step 1, adding base pearl luster pigment coated with one or more metal oxide layers into deionized water, mixing into a suspension, heating the suspension to 20-80 °C, preferably 50 - 80 °C.
Step 2, adding phosphorous acid or phosphite. If phosphite is used, the pH of the suspension will increase and diluted hydrochloric acid is added to adjust the pH to 3.0 or below 3.0. Adding water soluble aluminum or zinc salt to the suspension and mixing well. Then diluted alkaline solution is added slowly to adjust the pH to 5.0 -7.0, preferably 5.5 - 6.5. Agitating the suspension for another 15 minutes after the addition is completed. During this period of time the added phosphite or phosphorous acid reacts with aluminum or zinc salt to generate a coating of aluminum or zinc phosphite on the pearl luster pigment surface. The amount of aluminum phosphite coated, calculated as the content of aluminum element, is 0.01 - 1.0 wt% of the base pearl luster pigment, preferably 0.05 - 0.5%. The amount of zinc phosphite coated, calculated as the content of zinc, is 0.05 - 1.5 wt% of the base pearl luster pigment, preferably 0.1 - 0.6%.
Step 3, adding water soluble cerium salt and adding diluted alkaline solution at the same time to maintaine the pH of the suspension at 5.5 - 6.5. After the addition, agitating the suspension for another 20 min. During this period of time the added cerium salt coats on the surface of pearl luster pigment particles in the form of hydrous cerium dioxide (or cerium hydroxide). The amount of hydrous cerium dioxide (or cerium hydroxide) coated, calculated as the content of cerium element, is 0.05 *-* 1.5 wt% of the base pearl luster pigment, preferably 0.1 - 0.6 wt%.
Step 4, continually adding the diluted alkaline solution to adjust the pH of the suspension to 8.0. Then Silane coupling agent is added dropwise and agitating continues for another 2 h after the addition is completed. The amount of silane coupling agent added is 0.5 - 10 wt% of the base pearl luster pigment, preferably 1.0 - 5.0 wt%.
Step 5, filtering obtained suspension to separating the coated pigment particles, which is subsequently washed to remove soluble salts. The final product is dried at 140°C for 16 h.

For post treatment, the suitable phosphorous acid and phosphite are water soluble compounds such as phosphorous acid, sodium phosphite, sodium hydrogen phosphite, potassium phosphite, potassium hydrogen phosphite etc.

Suitable water soluble aluminum or zinc salts can be, such as water soluble chloride, nitrate, sulfate and their hydrates etc.

Suitable cerium salt can be water soluble cerium salt such as cerium chloride, cerium nitrate etc.

Suitable silane coupling agent can be selected from various silane coupling agent afore-mentioned.

The post coated pearl pigments prepared according to this invention can be used for outdoor applications such as automobile painting, bike painting and architectural exterior painting etc. They can also be used for other applications like ink, leather, plastic and cosmetics products.

For further illustration the following examples are given.

### EXAMPLE

### Example 1

100 g of silvery TiO2-coated mica pearl pigment (Taizhu 1202, containing 29% rutile TiO₂ and 70% mica) was added into 1L of deionized water. The resultant suspension was heated with stirring to 75°C and the temperature was kept constant.

To above suspension 0.36g of phosphorous acid and 9ml of aqueous solution of AlCl₃.6 H₂O (conc. 80g/l) were added and the suspension was kept on stirring for 20 min. Then the NaOH of conc. 3.5% was added to raise the pH of the suspension slowly to 6.0. and the suspension was stirred for another 15 min.

To the suspension 18 ml of aqueous solution of CeCl₃.6H₂O (conc. 25g/l) was added, during which the pH was kept constant at 6.0 by adding 3.5% NaOH solution.

After that, the suspension was continually stirred for 20min and NaOH of conc. 3.5% was added to raise the pH slowly to 8.0. 4g of epoxy functional silane coupling agent (γ-glycidoxypropyl trimethoxy silane) was added subsequently within 10 min, and the suspension was stirred continually for 2 h at 75°C.

The pigment particles was separated from the final suspension through filtering and washed using deionized water to remove the soluble salts, followed by drying it at 140°C for 16h.

Thereby a silvery pearl luster pigment used for outdoor applications was obtained.

### Example 2

100g of bronze Fe₂O₃-coated mica luster pearl pigment (Taizhu 4001, containing 38% Fe₂O₃and 62% mica) was added into I L of deionized water. The resultant suspension was heated with stirring to 75°C and the temperature was kept constant.

To above suspension 0.12 g of phosphorous acid and 5ml of aqueous solution of ZnCl₂ (conc. 40g/l) were added and the suspension was stirred for 20 min. Then the NaOH of conc. 3.5% was added slowly to raise the pH of suspension to 6.0. and the suspension was stirred for another 15 min.

To the suspension 20 ml of aqueous solution of CeCl₃.6H₂O (conc. 25g/l) was added during which the pH was kept constant at 6.0 by adding 3.5% NaOH solution.

After keeping on stirring for 20min NaOH of conc. 3.5% was added to raise the pH of suspension to 8.0.

To above suspension 3g of diamino silane coupling agent (N-(βaminoethyl)-γ-aminopropyl trimethoxy silane) was added continually and the suspension was stirred for 2 h at 75°C.

The pigment particles was separated from the final suspension through filtering and washed using deionized water to remove the soluble salts followed by drying it at 140°C for 16h.

Thereby a kind of bronze pearl luster pigment used in outdoor applications was obtained.

### Example 3

The procedure of example 1 was repeated except that the base pearl pigment is blue interference color TiO2-coated mica pearl pigment (Taizhu 2004, containing 51% rutile TiO₂ and 48% mica). Finally the blue interference color pearl luster pigment used in outdoor applications was obtained.

### Example 4 (comparative example)

100 g of silvery TiO₂-coated mica pearl pigment (Taizhu 1202, containing 29% rutile TiO₂ and 70% mica) was added into 1 L of deionized water. The resultant suspension was heated with stirring to 75°C and the temperature was kept constant.

To above suspension diluted HCl was added dropwise to lower the pH of suspension to 6.0. Then 32 ml of aqueous solution of CrCl₃ (conc. 5%) was diluted with 100ml of deionized water, and while this solution was added at constant rate to the above suspension within approximately 30 min., the NaOH of conc. 10% was added dropwise to keep the pH of the suspension constant.

The pearl luster pigment was separated from the suspension through filtering and washed with water, followed by drying it at 120°C for 1h.

Thereby a kind of silvery pearl pigment coated with hydrous chromium oxide (or chromium hydroxide) used in outdoor applications, which was prepared according to US patent 4,134,776, was obtained.

Artificial weathering test

Weather ability of the pearl luster pigments from post-coated examples and the comparative example, and the base pearl luster pigment were evaluated by artificially accelerated weathering test.

### 1. Making of coating panel

Samples from examples and comparative example, and the base pearl pigment were added to acrylic acid/amino paint (at a pigment/paint ratio of 0.2) separately to formulate the pearl luster paints, which were used as a part of paint system. The paint was sprayed on a steel panel (0.8 x 70 x 150 mm) which had been electrophoresis. The coating system thus produced consisted of a layer of white base (15 - 20 µm thick), a layer of pearl luster coating and a layer of light-shading varnish coating. The thickness of the pearl coating was about 15-20 µm. while the thickness of the whole coating layers were about 60 -80 µm. After the spraying the panels were baked at 140°C for 30 min. Thus the panel containing pearl coating for the test was made.

### 2. Weathering test of the coated panel

The panels were placed in QUV test machine for artificially accelerated degradation test. They were exposed to UV light (UV-313 lamp) at 70°C for 8 h and then exposed to a 100% humidity atmosphere for 4h at 50°C. The cycle was repeated.

The overall effect of the test is to accelerate the degradation of the coating under the enhanced UV irradiation and in the damp and hot humid atmosphere. According to US 4134776, the data indicates that the effect of 672 h's test in QUV was almost equivalent to 2 year's exposure in the environment of southern Florida.

In our test, sample panels were withdrawn after 840 h and 1440 h, respectively, and were determinated and graded according to "GB/T1766-1995 - paint and varnish-rating schemes of degradation of coats".

### 3. Results of the weathering test

The results were shown in table 1

**Table 1. The results of artificially accelerated weathering test for coating panels in QUV test machine.**

| Item | Ageing time (h) | Loss of luster (%) | Loss of luster (Grade) | Color change ΔE | Color change (Grade) |
|---|---|---|---|---|---|
| example 1 | 840 | 0.93 | No loss (0) | 3.08 | Light change (2) |
| | 1440 | -0.93 | No loss (0) | 3.93 | Light change (2) |
| example 2 | 840 | 1.22 | No loss (0) | 3.44 | Light change (2) |
| | 1440 | -0.45 | No loss (0) | 4.39 | Light change (2) |
| example4 | 840 | 4.10 | Slight loss (1) | 4.52 | Light change (2) |
| | 1440 | 5.11 | Slight loss (1) | 5.62 | Light change (2) |
| Control TZ1004 | 840 | 86.9 | Total loss (5) | >12 | Severe change (5) |
| Control TZ1201 | 840 | 52.5 | Severe loss (4) | > 12 | Severe change (5) |

| | | | | | |
|---|---|---|---|---|---|
| Note: 1 Control TZ1004 was anatase pearl luster pigment; TZ1201 was rutile pearl luster pigment 2 Loss of luster was shown as percentage of the lost luster in original gloss and the gloss was measured with a spectrophotometer. 3 Color change, ΔE, was measured with a spectrophotometer. | | | | | |

From Table 1, it can be seen that compared with other pearl luster pigments, the post-treated pigments in this invention had a better sability and had higher resistance to luster loss and color change when used in outdoor applications.

## Claims

1. A pearl luster pigment for exterior use, comprising four layers, layer 1 is a platelet shaped substrate, layer 2 is a metal oxide coated on said substrate, layer 3 is a phosphite and cerium dioxide hydrate or hydroxide coated on said layer 2, layer 4 is a hydrolyzed silane coupling agent, wherein the former two layers form the base pearl luster pigment, and the layer 3 and 4 are the post-treatment layers.

2. The pearl luster pigment according to claim 1 wherein the substrate platelets is natural or synthetic mica.

3. The pearl luster pigment according to claim 1 and 2 wherein at least one of the metal oxide forming the second layer is selected from the group consisting of titanium dioxide, ferric trioxide, stannic oxide, zinc oxide, aluminium oxide, and silicon dioxide.

4. The pearl luster pigment according to claim 3 wherein the metal oxides are titanium dioxide and/or iron (III) oxide.

5. The pearl luster pigment according to claim 1 wherein said phosphite salt forming layer 3 is aluminium phosphite.

6. The pearl luster pigment according to claim 1 wherein said phosphite salt forming layer 3 is zinc phosphite.

7. The pearl luster pigment according to claim 1 wherein said silane coupling agent forming layer 4 is a silane coupling agent having alkoxy group.

8. The pearl luster pigment according to claim 5 wherein the amount of said aluminium phosphite calculated as the content of aluminium element, is 0.01-1.0 wt % of the base pearl luster pigment.

9. The pearl luster pigment according to claim 8 wherein the amount of said aluminium element is 0.05-0.5 wt % of the base pearl pigment.

10. The pearl luster pigment according to claim 6 wherein the amount of said zinc phosphate, calculated as the content of zinc element, is 0.05-1.5 wt % of the base pearl luster pigment.

11. The pearl luster pigment according to claim 10 wherein the amount of said zinc element is 0.1-0.6 wt % of the base pearl luster pigment.

12. The pearl luster pigment according to claim 1 wherein the amount of said cerium dioxide hydrate or hydroxide forming layer 3, calculated as the content of cerium element, is 0.05-1.5 wt % of the base pearl luster pigment.

13. The pearl luster pigment according to claim 12 wherein the amount of said cerium element is 0.1-0.6 wt % of the base pearl luster pigment.

14. The pearl pigment according to claim 1 wherein the amount of said silane coupling agent forming layer 4, is 0.05-10.0 wt % of the base pearl luster pigment.

15. The pearl luster pigment according to claim 14 wherein the amount of said silane coupling agent is 1.0-5.0 wt % of the base pearl luster pigmen.

16. A process for preparing the pearl luster pigment according to claim 1, comprising the steps of:
(1) suspending base pearl luster pigment platelets in water and heating the suspension to 20-100°C;
(2) adding phosphorous acid or phosphate, and adding dilute HCl when necessary, to adjust the pH of the suspension solution to 3 or lower, then adding water soluble aluminium salt or zinc salt, after mixing thoroughly, adding diluted alkaline solution slowly to raise the pH of the suspension solution to 5.0-7.0 gradually.
(3) adding water soluble cerium salt while keeping the pH of the suspension solution constant by adding diluted alkaline solution.
(4) adding diluted alkaline solution to raise the pH of the suspension to 8.0, then adding silane coupling agent dropwise and agitate for 2 h.
(5) filtering the suspension solution to separate the pigment, washing obtained pigment platelets, and drying them at 140°C for 16 h.

17. The process according to claim 16, wherein said base pearl luster pigment is mica coated with titanium dioxide.

18. The process according to claim 16, wherein said base pearl luster pigment is mica coated with iron (III) oxide.

19. The process according to claim 16, wherein in the first step the suspension is heated to 50-80°C.

20. The process according to claim 16, wherein in the second step the pH of the suspension is raised to 5.5-6.5.

21. The process according to claim 16, wherein in the fourth step the dropwise added silane coupling agent is a silane coupling agent having alkoxyl group.
